# EUROPEAN PATENT APPLICATION

(11) **EP 0 557 862 A1**
(43) Date of publication of application: **01.09.1993**
(21) Application number: 93102396.4
(22) Date of filing: 16.02.1993
(51) Int. Cl.: C10L 1/00

(54) **Method for the disposal of generally liquid waste containing hydrocarbons**

(30) Priority: 22.02.1992 GB 9203860
(71) Applicant: J. WHELAN & SONS LIMITED, Aston, Birmingham, West Midlands (GB)
(72) Inventor: Whelan, John Michael, Tanworth in Arden B94 5AP (GB)
(74) Representative: Lucking, David John

(57) **Abstract**

A method for the disposal of generally liquid waste containing hydrocarbons comprises the steps of treating the waste substantially to remove water and/or solids therefrom to leave liquids containing hydrocarbons, feeding the liquid containing hydrocarbons to a fluid inlet of a stationary internal combustion engine (15) and using the liquid containing hydrocarbons as a fuel in the engine, and using the internal combustion engine (15) to drive an electricity generating device (18) to generate electricity.

## Description

This invention relates to a method for the disposal of generally liquid waste containing hydrocarbons.

Conventionally, such generally liquid waste containing hydrocarbons such as for example used engine oil, solvents, thinners, machine coolants and all other generally liquid waste which contains hydrocarbons, is disposed of by burning. Some recycling also occurs.

It is known to recover the heat generated from burning such waste and to use the heat thus recovered, to generate steam to drive turbines for the production of electricity. Using the heat generated to produce electricity in this way, is one of the most efficient ways of producing electricity from the waste, but it will be appreciated that a relatively large volume of steam is produced, and disposal of the steam can present a problem particularly in large scale operations. Conventionally, such steam is condensed using cool water from a local water source such as a reservoir or river, which is then returned to the water source.

Such a method for the disposal of generally liquid waste containing hydrocarbons is not practical where the disposal site is not in close proximity to a suitable water source.

According to one aspect of the invention we provide a method for the disposal of generally liquid waste containing hydrocarbons comprising the steps of treating the waste substantially to remove water and/or solids therefrom to leave liquid containing hydrocarbons, feeding the liquid containing hydrocarbons to a fluid inlet of a stationary internal combustion engine and using the liquid containing hydrocarbons as a fuel in the engine, and using the internal combustion engine to drive an electricity generating device to generate electricity.

Utilising such a method for the disposal of generally liquid waste containing hydrocarbons therefore does not require a cool water source for condensing steam, because large quantities of steam are not produced. Although the internal combustion engine will produce exhaust emissions, which may contain water vapour, these can be treated prior to release, for example by secondary combustion, and need not therefore present a disposal problem. Also of course, by suitable treatment of the exhaust gases, any potential pollution problem can be circumvented.

The generally liquid waste containing hydrocarbons may comprise, for examples only, spent lubricating oil such as engine oil, contaminated solvents or thinners which may contain paint or other sludge, machine coolants or any other generally liquid waste containing some hydrocarbons.

Preferably, during the step of treating the waste, the waste is filtered to remove solids therefrom. It will be appreciated that the presence of particularly aluminium and silicon fines which commonly are present in spent engine oil, can have a deleterious effect on the performance of the internal combustion engine. Particularly, deposits of silicon and aluminium on the working parts of the engine can seriously impair the performance of the engine and can considerably shorten the working life of the engine. By filtering the waste suitably, silicon and aluminium fines can be removed at least to below an acceptable level such as the Cimac standard which permits only 80 parts per million of such contaminates in liquid fuel.

To improve separation of the solids from the waste, the treatment step may include centrifuging the waste.

It has been found that by heating the waste to an elevated temperature prior to treatment, the efficiency of treatment is improved. In one example, the waste was heated to a temperature of at least 80° for treatment.

To remove water from the liquid waste, the step of treating the waste may include using a separation technique to settle water out of the waste. For example, the generally liquid waste may simply be placed in a settling tank and water drawn off from below the remaining waste.

In another arrangement, the liquid waste may be treated to remove water prior to feeding the liquid containing hydrocarbons into the engine, by distillation e.g. steam distallation, fractional distallation or vacuum distillation.

The method may include the step of treating exhaust emissions from the engine to remove pollutants. For example, the exhaust emissions may be fed through a suitable catalytic converter, or secondary combustion of the exhaust emissions may be performed.

The liquid containing hydrocarbons remaining after treatment of the waste may be fed to the fuel inlet of the stationary internal combustion engine directly after treatment, or may be fed to a reservoir for temporary storage. In each case, the temperature of the treated waste is preferably arranged to be above ambient temperature when fed into the engine for combustion, preferably at a temperature of above 50° C.

Although any kind of internal combustion engine may be used to drive the electricity generating device, preferably the internal combustion engine is of the diesel type which it has been found is more able to cope with a wide variety of liquid containing hydrocarbons. If desired, the diesel engine may have spark assisted ignition.

The internal combustion engine may have an output drive member coupled directly or through an appropriate transmission to an input member of the electricity generating device. Alternatively, the output drive member may comprise an input member of the electricity generating device.

Preferably waste heat from the exhaust gases of the engine is recovered and used in a supplementary electricity generating device to generate additional electricity. For example, waste heat in the exhaust emissions may be used to generate steam, the steam produced being utilised to drive an input member of the supplementary electricity generating device.

According to a second aspect of the invention we provide an apparatus for performing the method of the first aspect of the invention, the apparatus comprising means to treat the generally liquid waste containing hydrocarbons substantially to remove water and/or solids therefrom, means to feed the remaining liquid containing hydrocarbons to a fuel inlet of a stationary internal combustion engine, and electricity generating means coupled to the internal combustion engine and being drivable therefrom to produce electricity.

Such apparatus may provide a fuel storage means to store the liquid containing hydrocarbons remaining after the treatment of the waste.

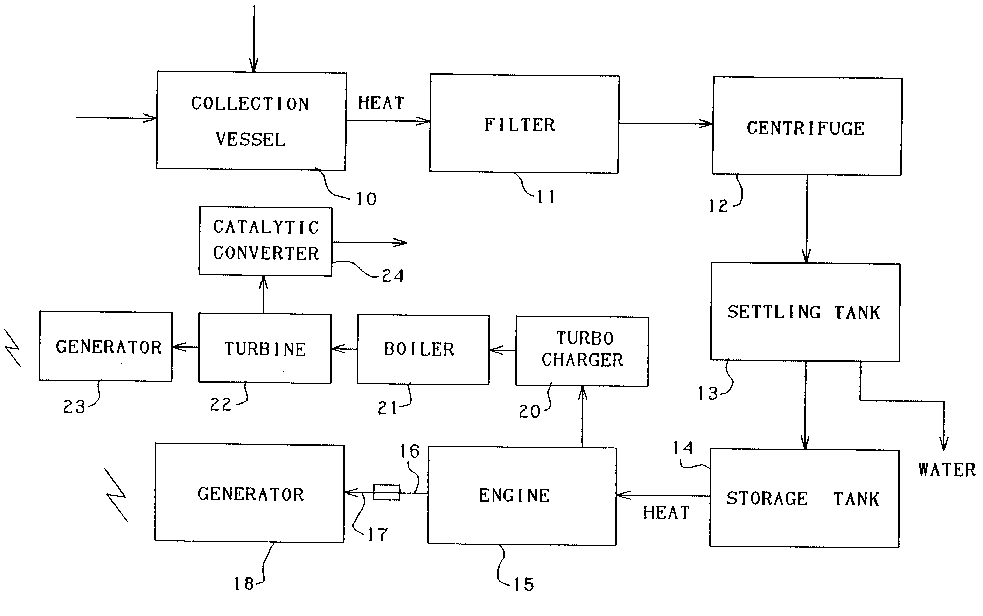

The invention will now be described with reference to the accompanying drawing which is a schematic illustration showing the steps used in performing the method of the invention.

Referring to the drawings, a quantity of generally liquid waste comprising spent engine oil which contains hydrocarbons, was collected in a storage vessel 10 and treated to remove solids e.g. aluminium and silicon fines, and to reduce the amount of water present in the waste.

This was achieved by first heating the generally liquid waste to a temperature of between 80 and 90° C to improve flowability, and then filtering the waste using a filter 11 to remove at least the larger solids entrained in the waste, whilst at its elevated temperature. The filtrate was then placed in a centrifuge 12 and centrifuged, whereby more solids, and in particular the finer fines were removed from the waste.

The thus filtered and centrifuged waste was then placed in a settling tank 13 to enable water in the waste to be separated from liquid hydrocarbons of waste, the water being drawn off from beneath the waste.

Alternatively, water could be separated from the liquid hydrocarbons prior to filtering and/or centrifuging the waste and/or removed by some other method, such as distillation.

The treated waste was then placed in a storage container 14 e.g. a tank from where the liquid was drawn off when desired, and fed to a fuel inlet of a stationary internal combustion engine 15.

It will be appreciated that by treating the generally liquid waste substantially as described, the proportion of fines, and in particular silicon and aluminium fines, present in the liquid waste, was reduced to an acceptable level i.e. below the Cimac standard of 80 parts per million. Silicon and aluminium fines particularly can have a deleterious effect on the performance of the internal combustion engine, and particularly can have an abrasive effect on the working parts of the engine which can lead to shortening of the working life of the engine.

If desired, after treatment, in a continuous process, the treated liquid containing hydrocarbons could be fed directly to a fuel inlet of the stationary internal combustion engine 15, although in the example tested, the waste was stored after treatment as described above.

Prior to introducing the treated waste into the internal combustion engine, the treated waste was heated to a temperature of around 50° C.

Because diesel type engines are generally able reliably to use fuels of varying calorific values, a diesel engine was selected as an appropriate engine for a trial.

The particular diesel engine selected was a K3 Mark II model of Mirrlees Blackstone which is a direct injection engine able to produce sufficient power to drive a one megawatt electricity generator when rotating at between 500 and 600 revolutions per minute. The particular engine used was specified as having a power of 1250 kw at 600 revolutions per minute, and contained three cylinders.

In trials, the engine 15 was run for two weeks using treated waste as a fuel and then the engine 15 was stripped and examined. No appreciable signs of wear or contamination of the working parts of the engine was found, although some silicon and aluminium deposits were found on exhaust valves of the engine. However the test was discovered to be entirely satisfactory.

If desired, a diesel engine which has a spark fitted ignition could be used if this was found to be necessary particularly where the waste fuel is of a particularly low calorific value, although alternatively such low calorific value fuel could be mixed with treated liquid waste of a higher calorific value, or another higher calorific value fuel, to assist combustion.

During the trials described above, an output drive member 16 of the engine i.e. the crankshaft, was coupled directly to an input member 17 being a rotor of an electricity generator 18. In another arrangement, a suitable transmission may be provided between the crankshaft of the engine and the input member of the electricity generating device to enable these to be decoupled and if desired, to enable the input member of the electricity generating device to be driven at a different rotational speed to the crankshaft of the internal combustion engine. In yet another arrangement, the drive output member of the engine may be integral with an input member of the electricity generating device.

In the trials described above, the exhaust emissions of the engine 15 were used to drive a turbocharger 20 for the engine. It has been calculated that utilising the method as in the trial described above, the efficiency of electricity production was about 42% although it is envisaged that by recovering heat from the exhaust gases as described below, the efficiency of electricity production can be increased to around 80%.

It is envisaged that heat from the exhaust gases may be used in steam generation, for example in a boiler 21, and for the steam produced to be used to drive a turbine 22 of a supplementary electricity generating device 23, thereby to generate additional electricity.

The exhaust emissions from the engine 15 may be treated as required to reduce potential pollution problems, before being exhausted into the environment. For example, the exhaust emissions could be passed through a catalytic converter 24, or subjected to secondary combustion.

Although in the trials described above, spent engine oil was used, it will be appreciated that the invention may be applied to the disposal of any other spent lubricating oil, or any other generally liquid waste containing hydrocarbons, even the treatment of machine coolants which may have only low levels of hydrocarbons.

Such a method for the disposal of the waste may not be as efficient at producing electricity as for example, using heat generated by burning the waste to generate steam to drive a steam turbine of an electricity generator, particularly if heat is not recovered from the exhaust gases from the internal combustion engine. However, the method of the invention has the advantage that large volumes of steam are not produced and so an apparatus to perform the method of the invention need not be situated near a water source.

Despite the very successful trial described above, it is envisaged that an internal combustion engine which utilises treated waste containing hydrocarbons as a fuel, may require greater and more frequent maintenance than otherwise would be required for example if the internal combustion engine was fed with virgin fuel, but it is envisaged that the cost of any such additional maintenance will be offset by the ready availability of generally liquid waste containing hydrocarbons, such as spent engine oil, which can be obtained cheaply.

## Claims

1. A method for the disposal of generally liquid waste containing hydrocarbons comprising the steps of treating the waste substantially to remove water and/or solids therefrom to leave liquids containing hydrocarbons, feeding the liquid containing hydrocarbons to a fluid inlet of a stationary internal combustion engine (15) and using the liquid containing hydrocarbons as a fuel in the engine (15) and using the internal combustion engine (15) to drive an electricity generating device (18) to generate electricity.

2. A method according to claim 1 characterised in that the step of treating the waste includes filtering the waste (11) and/or centrifuging the waste (12) to remove solids therefrom.

3. A method according to claim 1 or claim 2 characterised in that the waste is heated to an elevated temperature of at least 80° C prior to treating the waste to remove solids therefrom.

4. A method according to any one of claims 1 to 3 characterised in that the waste is treated to separate water out of the waste using a settling or distillation technique.

5. A method according to any one of claims 1 to 4 characterised in that the exhaust emissions from the engine are treated to remove pollutants therefrom.

6. A method according to any one of claims 1 to 5 characterised in that the temperature of the treated waste is arranged to be above 50° when fed into the engine (15) for combustion.

7. A method according to any one of claims 1 to 6 characterised in that the internal combustion engine (15) is of the diesel type which may have spark assisted ignition.

8. A method according to any one of claims 1 to 7 characterised in that the internal combustion engine (15) comprises an output drive member (16) which is coupled directly or through an appropriate transmission to, or comprises, an input member (17) of the electricity generating device (18).

9. A method according to any one of the preceding claims wherein waste heat from the exhaust gases of the engine is recovered and used in a supplementary electricity generating device (33) to generate additional electricity.

10. An apparatus for performing the method according to any one of the preceding claims, the apparatus comprising means (11,12,13) to treat the generally liquid waste containing hydrocarbon substantially to remove water and/or solids therefrom, means (14) to feed the remaining liquid containing hydrocarbons to a fuel inlet of a stationary internal combustion engine (15) and electricity generating means (18) coupled to the internal combustion engine (15) and being drivable therefrom to produce electricity.
